# EUROPEAN PATENT APPLICATION

(11) **EP 3 939 847 A1**
(43) Date of publication of application: **19.01.2022**
(21) Application number: 20808900.3
(22) Date of filing: 27.04.2020
(51) Int. Cl.: B60W 50/14, G08G 1/16

(54) **CONTROL DEVICE AND PRESENTATION SYSTEM**

(30) Priority: 17.05.2019 JP 2019093978; 06.04.2020 JP 2020068556
(71) Applicant: Kabushiki Kaisha Tokai Rika Denki Seisakusho, Aichi 480-0195 (JP)
(72) Inventor: MITSUI, Yuji, Niwa-gun, Aichi 480-0195 (JP); YARAGAMI, Kazuhito, Niwa-gun, Aichi 480-0195 (JP); TAKAI, Toshihito, Niwa-gun, Aichi 480-0195 (JP); ARAYA, Takao, Niwa-gun, Aichi 480-0195 (JP); OHNISHI, Takeshi, Niwa-gun, Aichi 480-0195 (JP); NOMURA, Keiji, Niwa-gun, Aichi 480-0195 (JP); NAKANE, Keita, Niwa-gun, Aichi 480-0195 (JP); SENGOKU, Takakazu, Niwa-gun, Aichi 480-0195 (JP); IMAI, Tomomi, Niwa-gun, Aichi 480-0195 (JP)
(74) Representative: TBK
(86) International application number: PCT/JP2020/017881
(87) International publication number: WO 2020/235303

(57) **Abstract**

[Object] To allow a user to perceive occurrence of a predetermined situation more appropriately.

[Solution] Provided is a control device including a control section configured to control provision of information by a provision section that provides information. The control section causes the provision section to provide the information regardless of whether or not a user has issued a request in a case where a situation that should be understood by the user is detected. Provided is a provision system including: a provision section configured to provide information to a user; and a control section configured to control the provision of the information by the provision section. The control section causes the provision section to provide the information regardless of whether or not the user has issued a request in a case where a situation that should be understood by the user is detected.

## Description

### Technical Field

The present invention relates to a control device and a provision system.

### Background Art

In recent years, various kinds of devices that provide information to users have been developed. For example, Patent Literature 1 discloses a technology of notifying a driver of driving behavior. The driver drives a vehicle.

### Citation List

### Patent Literature

Patent Literature 1: JP 2018-22229A

### Disclosure of Invention

### Technical Problem

However, according to the technology disclosed in Patent Literature 1, information to be provided to a user increases as an amount of information of which a system notifies with regard to driving behavior increases. Therefore, methods of providing information that is more perceivable by the user has been desired.

Accordingly, the present invention is made in view of the aforementioned problem, and an object of the present invention is to provide a novel and improved control device and provision system that allow the user to perceive occurrence of a predetermined situation more appropriately.

### Solution to Problem

To solve the above-described problems, according to an aspect of the present invention, there is provided a control device including a control section configured to control provision of information by a provision section that provides information. The control section causes the provision section to provide the information regardless of whether or not a user has issued a request in a case where a situation that should be understood by the user is detected.

The control section may cause the provision section to provide the information in a case where a situation in which the user should change behavior is detected as the situation that should be understood by the user.

The situation that should be understood by the user may include a situation regarding a periphery of the user.

The situation regarding the periphery of the user may include a situation in which there is an obstructive factor to maintenance of a condition in a space where it is difficult for the user to perceive a situation.

The space where it is difficult for the user to perceive the situation may include the user's blind spot.

The space where it is difficult for the user to perceive the situation may include a space across an opening/closing mechanism from the user.

The provision of the information by the provision section may include main provision and sub provision. The main provision provides information. The sub provision provides information in a way of using less stimulation than the main provision. The control section may cause the provision section to provide information through the sub provision before providing information through the main provision.

The control section may cause the provision section to provide information to be tactually perceived by the user.

In addition, to solve the above-described problems, according to another aspect of the present invention, there is provided a provision system including: a provision section configured to provide information to a user; and a control section configured to control the provision of the information by the provision section. The control section causes the provision section to provide the information regardless of whether or not the user has issued a request in a case where a situation that should be understood by the user is detected.

### Advantageous Effects of Invention

As described above, according to the present invention, it is possible for a user to perceive occurrence of a predetermined situation more appropriately.

### Brief Description of Drawings

[FIG. 1] FIG. 1 is a block diagram illustrating a configuration example of a provision system according to an embodiment of the present invention.
[FIG. 2] FIG. 2 is a diagram illustrating an example of providing information in the case where a user's blind spot includes an obstructive factor according to the embodiment.
[FIG. 3] FIG. 3 is a diagram illustrating an example of providing information in the case where the user's blind spot includes an obstructive factor across an opening/closing mechanism from the user according to the embodiment.
[FIG. 4] FIG. 4 is a diagram for describing provision of information with regard to prior notification of a traveling direction according to the embodiment.
[FIG. 5] FIG. 5 is a diagram for describing provision of information including sub provision according to the embodiment.

### Mode(s) for Carrying Out the Invention

Hereinafter, referring to the appended drawings, preferred embodiments of the present invention will be described in detail. Note that, in this specification and the appended drawings, structural elements that have substantially the same function and structure are denoted with the same reference signs, and repeated explanation of these structural elements will be omitted.

### <1. Embodiment

### <<1.1. Overview>>

First, an overview of the present disclosure will be described. As described above, various kinds of devices that provide information to users have been developed in recent years. Example of such a device include a safe driving behavior notification system disclosed in Patent Literature 1.

However, when using the above-described system, information to be provided to a user increases as an amount of information of which the system notifies with regard to driving behavior increases. In this case, important information that the user should preferentially understand blends into low-priority information, and there is a possibility that the user miss the important information.

The technical idea of an embodiment of the present invention was conceived by focusing on the above-described points, and allows the user to perceive occurrence of a predetermined situation more appropriately. Accordingly, a control device 20 according to the embodiment of the present disclosure includes a control section 210 configured to control provision of information by a provision section 310. In addition, one of features of the control section 210 according to the embodiment of the present disclosure is to cause the provision section 310 to provide the information regardless of whether or not the user has issued a request in a case where a situation that should be understood by the user is detected.

In other words, in the case where the situation that should be understood by the user is detected, the control section 210 according to the present embodiment causes the provision section 310 to provide information indicating that the situation is detected. Under the control of the control section 210 according to the present embodiment, it is possible for the user to perceive occurrence of a predetermined situation and to take an action to maintain a state regarding a periphery of the user even after the occurrence of the predetermined situation.

Note that, the situation that should be understood by the user may be various kinds of situations that should be perceived by the user. The situations that should be perceived by the user include a situation in which it is preferable for the user himself/herself to take an evasive action, a situation in which the user should change behavior, and the like. For example, such situations may be a situation that may solely occur to the user himself/herself, the situation regarding the periphery of the user, in particular, a situation that may occur on a relation with a situation around the user.

For example, the situation that may solely occur to the user himself/herself may include deterioration of physical/body condition of the user, reduction in degree of wakefulness, and the like.

In addition, the situation that may occur on a relation with a situation around the user may include a situation in which a relative relation between the user (or an object used by the user) and an object that exists near the user may decrease.

The relative relation may include a distance. For example, there is a possibility of collision in the case where the user is driving a vehicle and a distance between the vehicle and another vehicle traveling near the vehicle becomes a predetermined distance or less. This situation is the situation that may occur on the relation with the situation around the user and the situation that should be understood by the user.

In addition, the object that exists near the user may be a person. For example, in the case where the person has a worse mood, this situation is the situation that may occur on the relation with the situation around the user and the situation that should be understood by the user.

In the case where such a situation that should be understood by the user is detected, the control section 210 according to the present embodiment may cause the provision section 310 to provide information regardless of whether or not the user has issued a request.

Under the control of the control section 210 according to the present embodiment, it is possible for the user to perceive occurrence of a predetermined situation and to take an action to maintain a state regarding a periphery of the user even after the occurrence of the predetermined situation.

Next, details of configurations of the control device 20 and a provision system 1 that have the above-described features will be described.

### «1.2. Configuration Example»

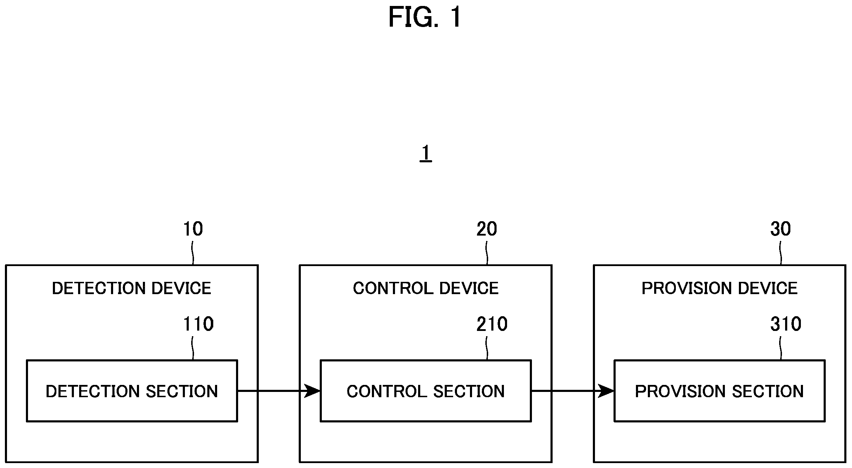

FIG. 1 is a block diagram illustrating the configuration example of the provision system 1 according to the present embodiment. As illustrated in FIG. 1, the provision system 1 according to the present embodiment includes a detection device 10, the control device 20, and a provision device 30, for example.

### (Detection Device 10)

The detection device 10 according to the present embodiment includes a detection section 110 that detects a user and a situation regarding a periphery of the user. For example, the detection section 110 according to the present embodiment detects moving objects, still objects, a landform, and the like. Examples of the moving object include pedestrians, bicycles, vehicles, and the like neat the user. Examples of the still object include fallen objects, installed objects, and the like. Therefore, for example, the detection section 110 according to the present embodiment includes an imaging sensor, an infrared sensor, a sonar, a microphone, or the like.

In addition, the detection section 110 according to the present embodiment may detect attributes of the user such as age, and health condition of the user. For example, the detection section 110 may detect such attributes on the basis of an image captured by the imaging sensor, or may detect vital signs such as heartbeat by using an ECG sensor or the like.

In addition, the detection section 110 according to the present embodiment may detect temperature, wind speed, weather, or the like around the user. For example, the detection section 110 according to the present embodiment is capable of detecting such information on the basis of information acquired from the Internet. Therefore, the detection section 110 according to the present embodiment includes various kinds of communication devices, a global navigation satellite system (GNSS) signal receiver, and the like.

### (Control Device 20)

The control device 20 according to the present embodiment includes a control section 210 that controls provision of information by the provision section 310. One of features of the control section 210 according to the present embodiment is to cause the provision section 310 to provide the information regardless of whether or not the user has issued a request in the case where the detection section 110 has detected a situation that should be understood by the user.

As described above, the situation that should be understood by the user include a situation in which it is preferable for the user himself/herself to take an evasive action, a situation in which the user should change behavior, and the like. In addition, for example, such a situation may be a situation that may solely occur to the user himself/herself, or a situation that may occur on a relation with a situation around the user. For example, a situation in which there is a possibility that the user may collide with another object or the like near the user is the situation that may occur on a relation with a situation around the user, and the situation in which the user should change behavior.

In the case where such a situation is detected, the control section 210 causes the provision section 310 to provide information regardless of whether or not the user has issued a request. This allows the user to perceive occurrence of the predetermined situation and to take an appropriate action such as the evasive action.

Note that, the function of the control section 210 according to the present embodiment may be implemented by cooperation of a processor such as a central processing unit (CPU) or a microcontroller unit (MCU), software, and a storage medium such as read only memory (ROM), or random access memory (RAM).

### (Provision Device 30)

The provision device 30 according to the present embodiment includes the provision section 310 that provides information to the user under the control of the control section 210. The provision section 310 according to the present embodiment provides information in a way that the user can perceive the information through five senses (sight, hearing, touch, smell, and taste).

Therefore, the provision section 310 according to the present embodiment may include a provision element dedicated to any of tactile sense provision, visual sense provision, smelling sense provision, taste sense provision, and auditory sense provision, or may include a plurality of provision elements of different types. Examples of a tactile sense provision element for providing a tactile sense include a structural element that provides a tactile sense with a vibratory stimulus, a structural element that provides a tactile sense with an electrical stimulus, a structural element that provides a tactile sense with temperature change, a structural element that provides a tactile sense with haptic force (for example, provision of a sense of being pushed by an object, provision of a sense of coming into contact with an object, provision of a sense of constriction, or the like), a structural element that provides a tactile sense of skin (for example, provision of a sense of touching a textured surface, provision of a sense of touching a smooth surface, or the like), and the like.

Examples of a visual sense provision element for providing a visual sense includes a structural element having a lighting function, a structural element capable of changing light transmittance such as light control glass, and the like. Examples of a smelling sense provision element for providing a smelling sense include a structural element that diffuses aroma into the air. Examples of a taste sense provision element for providing a taste sense include a structural element that adjusts taste of a thing to be put into a mouth, a structural element that adjusts taste of a thing that has put into a mouth, and the like. Examples of an auditory sense provision element for providing an auditory sense include a structural element that generates air vibration such as a speaker or earphones, a structural element having a bone conduction function, and the like.

More specifically, the tactile sense provision element may include a plurality of tactile sense provision elements that are installed at different points. For example, on the assumption that a mobile object such as a vehicle is used, the plurality of tactile sense provision elements may include one two or more tactile sense provision elements among a vibration device worn on a hand of the user, a vibration device closely worn on a waist of a driver, a motor for reeling a seat belt, a vibrator installed in a floorboard of a vehicle, a vibrator installed in a brake pedal, a vibrator installed in a seat, and a vibrator installed in a steering wheel.

In addition, the plurality of tactile sense provision elements may include tactile sense provision elements using different tactile sense provision ways. For example, the plurality of tactile sense provision elements may include a non-contact tactile sense provision element that provides a tactile sense to a driver in a non-contact manner and a contact tactile sense provision element that provides the tactile sense to the driver in a contact manner. Examples of the non-contact tactile sense provision element include an ultrasound vibration generation device, an air discharging device, a far-infrared radiation device, and the like. The ultrasound vibration generation device is installed in a center console or a door and generates ultrasound vibration toward thighs of the user. The air discharging device discharges air toward a face of the driver. The far-infrared radiation device radiates far-infrared toward the driver.

The configuration example of the provision system 1 according to the present embodiment has been described above. Note that, the configuration described above with reference to FIG. 1 is a mere example. The configuration of the provision system 1 according to the present embodiment is not limited thereto. For example, the case where the provision system 1 includes the three independent devices has been described above. However, the detection section 100, the control section 210, and the provision section 310 according to the present embodiment may be installed in a single device (such as a smartphone or a wearable device). The configuration of the provision system 1 according to the present embodiment may be flexibly modified in accordance with specifications and operations.

### «1.3. Application Example»

Details of an application example of the provision system 1 according to the present embodiment will be described. Next, an example in which the provision system 1 according to the present embodiment is installed in a mobile object such as a vehicle accommodating the user and information is provided to the user when a situation that should be understood by the user is detected with regard to a periphery of the user (or the mobile object driven by the user). will be described. As described above, the situation according to the present embodiment may be the situation regarding the periphery of the user.

For example, the situation regarding the periphery of the user may include a situation in which there is an obstructive factor to maintenance of a condition in a space where it is difficult for the user to perceive a situation. The obstructive factor may be various kinds of factors that interfere with the maintenance of the condition. For example, the obstructive factor may be an obstacle.

As described above, the situation in which there is the obstacle in the space where it is difficult for the user to perceive the obstacle is the situation that should be understood by the user regardless of whether or not the user has issued a request and the situation in which the user should change behavior to avoid the obstacle.

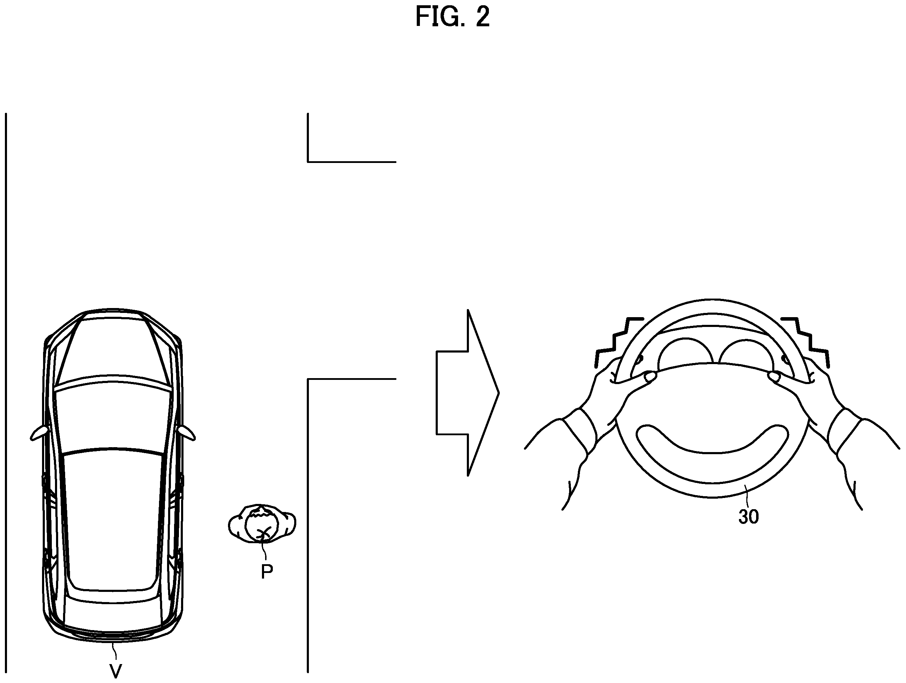

In addition, the space where it is difficult for the user to perceive the situation may include the user's blind spot. FIG. 2 is a diagram illustrating an example of providing information in the case where the user's blind spot includes the obstructive factor according to the present embodiment.

The left side of FIG. 2 illustrates a situation in which a mobile object V driven by the user is turning right at a three-forked road. In addition, in the example illustrated in FIG. 2, there is a pedestrian P in a blind spot on a rear right side of the mobile object V. Here, there is a possibility that the pedestrian P may collide with the mobile object V if the user turns right without noticing the pedestrian P in the blind spot and the pedestrian P walks straight toward the three-forked road. In this case, the pedestrian P is considered as the above-described obstructive factor. In addition, such a situation is a situation in which a relative relation between the user (or an object used by the user) and an object that exists near the user may decrease.

In the case where the detection section 110 has detected the situation in which the user should change behavior to maintain the condition as described above, the control section 210 may cause the provision device 30 implemented as the steering wheel 30 to provide information such as vibration to be tactually perceived by the user as illustrated in the right side of FIG. 2, for example. In addition, the control section 210 may cause the provision section 310 to provide information such as sound, text, or light to be auditorily or visually perceived by the user.

Under the control of the control section 210 according to the present embodiment, it is possible for the user who is driving the mobile obj ect V to intuitively and immediately perceive occurrence of a situation in which the user should stop turning right, and it is also possible to avoid collision with the pedestrian P.

Note that, the position of the pedestrian P (obstructive factor) illustrated in FIG. 2 is a mere example. For example, in the case of temporarily stopping the mobile object V to turn right, there is a possibility that the user may focus on a traveling direction, that is, the user may be preoccupied with a situation of turning right and merging onto a road and may be distracted from checking a situation of a left side of the mobile object V. In this case, the left side of the mobile object V may become the user's wind blind spot.

Under such a situation, there is a possibility that the user may start moving the mobile object V without noticing the obstructive factor such as the pedestrian P if the pedestrian P walks across the road in front of the mobile obj ect V from left to right.

Therefore, the blind spot according to the present embodiment maybe estimated depending on an action to be taken by the user regardless of an actual field of view of the user. For example, in the case where the mobile object V is turning right, a rear right side, a front left side, a rear left side, and the like of the mobile object V may be estimated as the blind spots.

On the other hand, the blind spot according to the present embodiment may be detected on the basis of an actual line of sight of the user. For example, it is possible for the detection section 110 to detect the line of sight of the user by using a technology such as corneal reflection and estimate the user7s blind spot on the basis of the line of sight.

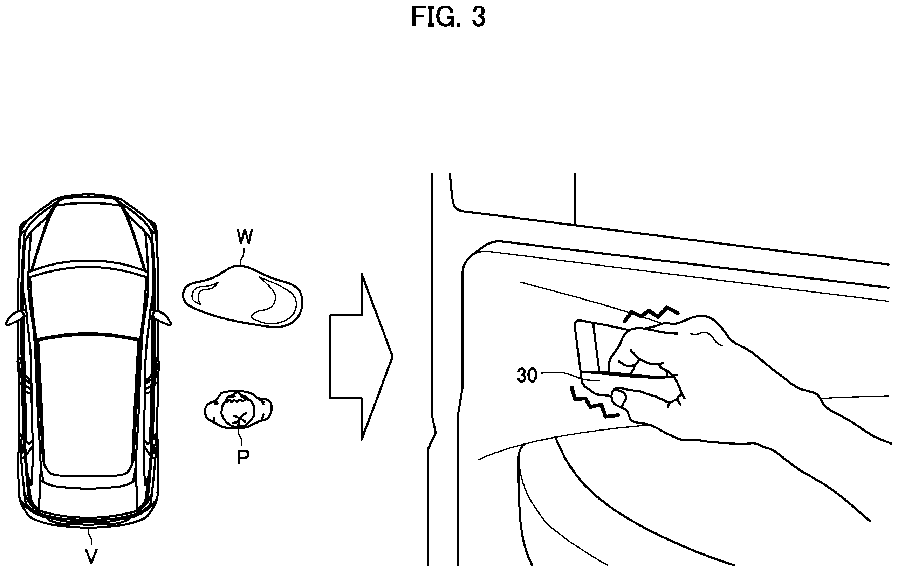

In addition, for example, the space where it is difficult for the user to perceive the situation may include a space across an opening/closing mechanism from the user. FIG. 3 is a diagram illustrating an example of providing information in the case where the user's blind spot includes an obstructive factor across the opening/closing mechanism from the user according to the present embodiment.

Here, for example, the opening/closing mechanism may be various kinds of doors. The left side of FIG. 3 illustrates a situation in which the mobile object V that the user drives is parked. In addition, FIG. 3 illustrates an example in which the pedestrian P is walking toward the front right side of the mobile object V from the rear right side of the mobile object V. Here, there is a possibility that the pedestrian P may collide with an open door if the user opens the driver's side door of the mobile object V without noticing the pedestrian P (it is assumed that the mobile object V is a righthand-drive car). In this case, the pedestrian P is considered as the above-described obstructive factor.

In addition, in the example illustrated in FIG. 3, there is a puddle W on a right external side of a driver's seat of the mobile object V. Here, there is a possibility that the user may step in the puddle W and a shoe or clothing of the user may get wet and dirty if the user opens the driver's side door and gets out of the mobile object V without noticing the puddle W. In this case, the puddle W is considered as the above-described obstructive factor.

As described above, the obstructive factor according to the present embodiment may widely include not only objects but also a landform such as a step or a hole and various kinds of natural phenomena. For example, there is a possibility that the door may be blown by strong wind and the door may hit peripheral objects if the user opens the door of the mobile object V without noticing the strong wind around the mobile object V. Therefore, wind blowing at a predetermined wind speed or more is also considered as one of the obstructive factors.

As exemplified above, the space outside the opening/closing mechanism such as the door is considered as the space where it is difficult for the user to perceive a situation. Therefore, the control section 210 according to the present embodiment may cause the provision section 310 to provide information in the case where the obstructive factor is detected in the space across the opening/closing mechanism from the user.

For example, the right side of FIG. 3 illustrates an example in which the control section 210 causes the provision device 30 to provide information to be tactually perceived by the user when the detection section 110 has detected that the user has come into contact with the provision device 30 implemented as a door handle of the driver's side door. The control section 210 may perform control in such a manner that the door handle vibrates or resistance increases when the door handle is pulled. Alternatively, for example, the provision device 30 may be implemented as a wearable terminal such as a wristwatch wearable terminal worn by the user, and the control section 210 may cause the provision device 30 to provide information to be tactually perceived by the user. In addition, the control section 210 may cause the provision section 310 to provide information such to be auditorily or visually perceived by the user.

Under the above-described control of the control section 210 according to the present embodiment, it is possible for the user to appropriately understand that there is a matter (obstructive factor) that the user should watch out for outside the doors, and to take an appropriate action such as the evasive action.

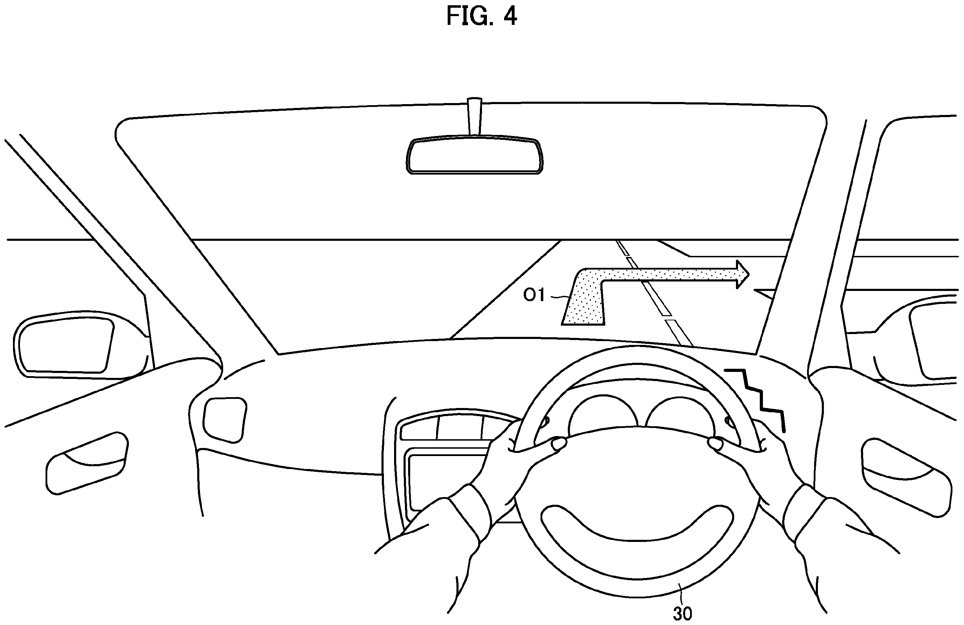

Next, provision of information with regard to prior notification of a traveling direction according to the present embodiment will be described. FIG. 4 is a diagram for describing the provision of information with regard to prior notification of a traveling direction according to the present embodiment.

For example, in the case of performing navigation or the like to a destination and notifying the user immediately before change in the traveling direction, there is a possibility that the user may react to the notification and may immediately slow down the mobile object or suddenly change its direction. This may affect the user and maintenance of a condition around the user. Therefore, the traveling direction of the user or the mobile object driven by the user is also considered as one of information that should be understood by the user.

Therefore, in the case of changing the traveling direction of the user, the control section 210 according to the present embodiment causes the provision section 310 to provide information in advance. FIG. 4 illustrates an example in which the control section 210 causes the provision device 30 implemented as the steering wheel to provide information to be tactually perceived by the user when it is detected that a distance to the three-forked road at which the mobile object turns left becomes a predetermined distance or less.

In addition, at this time, the control section 210 may cause the provision device 30 to provide information depending on a changing traveling direction. In the case of the example illustrated in FIG. 4, the control section 210 causes the vibrator installed in a right region of the provision device 30 to provide a tactile sense on the basis that the traveling direction is a direction toward a front right side of the mobile object. In addition, the control section 210 may control provision of information to be visually perceived by the user in such a manner that an object O1 representing the traveling direction is displayed in a superimposed manner, or the control section 210 may control provision of information to be auditorily perceived by the user in such a manner that sound is output.

Under the above-described control of the control section 210 according to the present embodiment, it is possible for the user to appropriately understand the traveling direction and to take an appropriate action in plenty of time.

The example of the situation of providing a tactile sense according to the present embodiment has been described above. Note that, the case where the provision system 1 according to the present embodiment is installed in the mobile object driven by the user has been mainly described above. However, application of the provision system 1 according to the present embodiment is not limited to the above-described example. For example, the provision system 1 according to the present embodiment is applicable to the wearable terminal worn by the user. Even in such a case, it is possible to avoid the obstructive factor in the user's blind spot or outside the door by using the above-described control method.

Next, notification including sub provision according to the present embodiment will be described. The above-described information provision method is important for the user to appropriately understand the situation. However, there is a possibility that sudden provision of information may surprise a user who is not used to the system or a user who is physically disadvantaged such as an elderly person, a child, a sick person, or an injured person.

Therefore, the provision of the information by the provision section 310 according to the present embodiment may include main provision and sub provision. The main provision provides information. The sub provision provides information in a way of using less stimulation than the main provision. For example, in the case of providing information with vibration, the sub provision according to the present embodiment may be provision of vibration with smaller acceleration than the main provision, or may be provision of vibration in a shorter time than the main provision. Alternatively, for example, in the case of providing information by sound, the sub provision may be provision of smaller sound than the main provision.

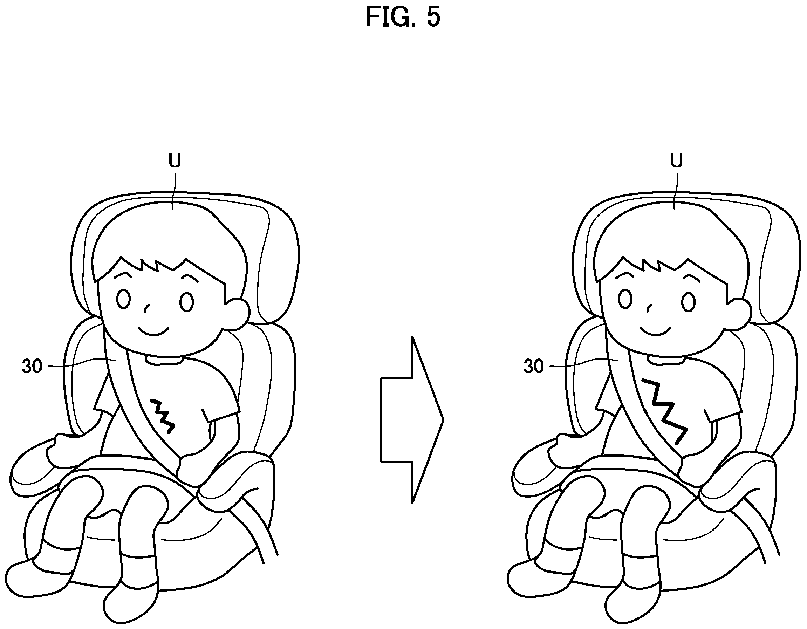

FIG. 5 is a diagram for describing provision of information including the sub provision according to the present embodiment. FIG. 5 illustrates an example in which a user U is a child, and the provision device 30 is a seat belt.

At this time, the detection section 110 according to the present embodiment first detects that the user U is the child on the basis of a captured image of the user U. In this case, as illustrated in the left side of FIG. 5, the control section 210 according to the present embodiment first causes the provision device 30 to make sub-provision in a way of using less stimulation than the main provision when the detection section 110 has detected that the user U is physically disadvantaged. FIG. 5 illustrates an example of providing information with vibration.

Next, as illustrated in the right side of FIG. 5, the control section 210 according to the present embodiment causes the provision section 30 to make the main provision in a way of giving a stimulus that is set in advance for use in notification.

Under the above-described control of the control section 210 according to the present embodiment, it is possible to provide information and notify the user of occurrence of a predetermined situation while effectively easing physical and mental strain even in the case where the user is physically disadvantaged.

### <2 Conclusion>

As described above, the control device 20 according to the embodiment of the present disclosure includes the control section 210 configured to control provision of information by the provision section 310. In addition, one of features of the control section 210 according to the embodiment of the present disclosure is to cause the provision section 310 to provide the information regardless of whether or not the user has issued a request in a case where a situation that should be understood by the user is detected. Such a configuration allows the user to perceive occurrence of a predetermined situation more appropriately.

Although details of the preferable embodiments of the present invention have been described above with reference to the appended drawings, the present invention is not limited thereto. It will be clear to a person of ordinary skill in the art of the present invention that various modifications and improvements may be obtained within the scope of the technical idea recited by the scope of the appended claims, and it should be understood that they will naturally come under the technical scope of the present invention.

### (1) Example of Detecting Situation that Should be Understood by User

The situation that should be understood by the user may be detected on the basis of prediction. For example, the detection section 110 predicts a situation caused by the following on the basis of an action taken by the user, an action taken by another person related to the user, a state of the vehicle driven by the user, vehicles around the vehicle driven by the user, and the like. Next, the detection section 110 detects the predicted situation as the situation that should be understood by the user. Next, examples thereof will be described.

For example, a situation in which washer fluid may be frozen may be detected as the situation that should be understood by the user when the user tries to perform washer operation in winter. In this case, the control section 210 may cause the provision section 310 to provide a tactile sense. In this case, for example, the provision device 30 may be installed in a lever or the like that receives the washer operation. Note that, the washer is a function of spraying the washer fluid onto a windshield of the vehicle. The washer fluid is fluid to be sprayed onto the windshield of the vehicle.

For another example, a situation in which the vehicle may collide with an obstacle behind the vehicle may be detected as the situation that should be understood by the user when the user is backing the vehicle. In addition, a situation in which warning sound may wake a child up may be detected as the situation that should be understood by the user when the warning sound is emitted while the child is sleeping on a backseat of the vehicle. In this case, the control section 210 may cause the provision section 310 to provide a tactile sense instead of the auditory sense. In this case, for example, the provision device 30 may be installed in the steering handle, a gear shifter, and the like.

For another example, a situation in which the vehicle may collide with another vehicle may be detected as the situation that should be understood by the user when the other vehicle is approaching the vehicle driven by the user. In this case, the control section 210 may cause the provision section 310 to provide both the tactile sense and the auditory sense at a same time.

For another example, a situation in which the vehicle may collide with an oncoming vehicle may be detected as the situation that should be understood by the user on the basis of speed of the oncoming vehicle and a distance to the oncoming vehicle when the user is turning the vehicle to the right. In this case, the control section 210 may cause the provision section 310 to provide a tactile sense.

For another example, a situation in which the vehicle may run out of gas may be detected as the situation that should be understood by the user when remaining quantity of fuel of the vehicle driven by the user is decreasing. In this case, the control section 210 may cause the provision section 310 to provide a tactile sense.

For another example, a situation in which a terminal owned by the user may run out of a battery may be detected as the situation that should be understood by the user when remaining quantity of the battery of the terminal is decreasing. In this case, the control section 210 may cause the provision section 310 to provide a tactile sense.

For another example, a situation in which a fluorescent light is about to burn out may be detected as the situation that should be understood by the user when the user is trying to operate a switch of the fluorescent light. In this case, the control section 210 may cause the provision section 310 to provide a tactile sense. Note that, the provision device 30 may be installed in the switch of the fluorescent light.

For another example, a situation in which the child wants to urinate may be detected as the situation that should be understood by the user on the basis of an amount of water intake, a body temperature, and the like of the child of the user. In this case, the control section 210 may cause the provision section 310 to provide a tactile sense. Such a control may be performed during the night while the user and the child are sleeping together. In this case, the user is a parent of the child. In addition, when the user who is the parent is awakened by the tactile sense provision, it is possible to for the user to wake the child up and encourage the child to go to a bathroom.

### (2) Other Examples of Situation in which User Should Change Behavior

The examples of the situation in which the user should change behavior are not limited to the above-described examples. Next, other examples will be described.

The situation in which the user should change behavior may be a situation in which a window of a house is opened while the child of the user is staying in the house alone. In the case where such a situation is detected, the control section 210 may cause the provision section 310 to provide a tactile sense to encourage the user who is the parent to cancel going out and go back home. In this case, for example, the provision device 30 may be installed in the smartphone.

The situation in which the user should change behavior may be a situation in which the seat belt is not worn appropriately. In the case where such a situation is detected, the control section 210 may cause the provision section 310 to provide a tactile sense to encourage the user to wear the seat belt appropriately. In the case where the seat belt is not worn, the provision device 30 installed in the seat may provide a tactile sense, for example. In the case where the seat belt is worn but the state of wearing the seat belt is not appropriate, the provision device 30 installed in the seat belt may provide a tactile sense, for example.

The situation in which the user should change behavior may be a situation in which there is an abnormality in the vehicle when the user gets out of the vehicle. Here, for example, the "abnormality" means a situation in which headlamps and hazard warning lamps stay on, or other situations. In the case where such a situation is detected, the control section 210 may cause the provision section 310 to provide a tactile sense to encourage the user to take an action to fix the abnormality. In this case, for example, the provision device 30 may be installed in the smartphone.

The situation in which the user should change behavior may be a situation in which the user gets in the vehicle without locking up the house of the user. In the case where such a situation is detected, the control section 210 may cause the provision section 310 to provide a tactile sense to encourage the user to lock up the house of the user. In this case, for example, the provision device 30 may be installed in the smartphone. Alternatively, the provision device 30 may be implemented as a wearable device installed in a wristwatch, a belt, clothing, underwear, or the like. In this case, the provision device 30 may provide a tactile sense when it is detected that the user has left the house.

The situation in which the user should change behavior may be a situation in which there is an abnormality in an oil heater. Here, the "abnormality" means a situation in which the user has forgotten to turn off the oil heater or to close an oil filler cap. In the case where such a situation is detected, the control section 210 may cause the provision section 310 to provide a tactile sense to encourage the user to take an action to fix the abnormality. In this case, for example, the provision device 30 may be installed in the smartphone.

The situation in which the user should change behavior may be a situation in which a specific time is coming closer. For example, the specific time may be time of departure of a last train to the home, time of a train to be taken by the user, time for an appointment to meet another person, or the like. In the case where such a situation is detected, the control section 210 may cause the provision section 310 to provide a tactile sense to encourage the user to take an action depending on the specific time that is coming closer. In this case, for example, the provision device 30 may be installed in the smartphone.

The situation in which the user should change behavior may be a situation in which there is an abnormality in an action taken bu the user to write. Writing instruments including a pencil, a ballpoint pen, a brush, and the like are used for writing. Here, the "abnormality" means a situation in which a stroke order is not right, a situation in which a pen tip deviates from an appropriate calligraphy trace, a situation in which speed of the pen tip deviates from appropriate speed, a situation in which brush pressure is not appropriate, and other situations. In the case where such a situation is detected, the control section 210 may cause the provision section 310 to provide a tactile sense to teach the user an appropriate way of writing. In this case, for example, the provision device 30 may be installed in the writing instrument.

### (3) Other Examples of Situation regarding Periphery of User

The examples of the situation regarding a periphery of the user are not limited to the above-described examples. Next, other examples will be described.

The situation regarding the periphery of the user may be a situation in which a home appliance, a light, and the like in the house of the user are staying on and the user has forgotten to turn them off. The control section 210 may cause the provision section 310 to provide a tactile sense to cause the user to perceive such a situation. In this case, for example, the provision device 30 may be installed in the smartphone.

The situation regarding the periphery of the user may be a situation in which an expiration date of reward points is approaching. Such reward points can be used for purchasing products in a store instead of money. The control section 210 may cause the provision section 310 to provide a tactile sense to cause the user to perceive such a situation when the user enters the store. In this case, for example, the provision device 30 may be installed in a membership card of the store.

The situation regarding the periphery of the user may be information indicating whether or not a road in the traveling direction of the vehicle driven by the user has enough width to allow the vehicle to pass through the road. The control section 210 may cause the provision section 310 to provide a tactile sense indicating whether or not the road has enough width to cause the user to perceive such a situation. In this case, for example, the provision device 30 may be installed in the steering handle.

The situation regarding the periphery of the user may be a situation in which the child of the user is about to take an inappropriate action. For example, the inappropriate action may be mischief or behavior that may be a physical threat to the child. The control section 210 may cause the provision section 310 to provide a tactile sense to cause the user to perceive such a situation. In this case, for example, the provision device 30 may be installed in the smartphone.

The situation regarding the periphery of the user may be a situation in which some teeth are left unbrushed while the user is brushing his/her teeth. The control section 210 may cause the provision section 310 to provide a tactile sense to cause the user to perceive such a situation. In this case, for example, the provision device 30 may be installed in a toothbrush.

The situation regarding the periphery of the user may be a situation in which a person in a wheelchair wants to urinate while the user is pushing the wheelchair. The control section 210 may cause the provision section 310 to provide a tactile sense to cause the user to perceive such a situation. In this case, for example, the provision device 30 may be installed in a push handle of the wheelchair.

The situation regarding the periphery of the user may be a situation in which the user is parking the vehicle in an area where parking is prohibited. The control section 210 may cause the provision section 310 to provide a tactile sense to cause the user to perceive such a situation. In this case, for example, the provision device 30 may be installed in the seat of the vehicle.

The situation regarding the periphery of the user may be a situation in which the user who is riding a motorcycle is turning right. The control section 210 may cause the provision section 310 to provide a tactile sense to cause the user to perceive such a situation. In this case, for example, the provision device 30 may be installed in a seat of the motorcycle, and a right side of the seat may vibrate.

The situation regarding the periphery of the user may be a situation in which the user is riding a bicycle and a vehicle is approaching the user from behind. The control section 210 may cause the provision section 310 to provide a tactile sense to cause the user to perceive such a situation. In this case, for example, the provision device 30 may be installed in a saddle of the bicycle.

The situation regarding the periphery of the user may be a situation in which the user has not done things to do in a room currently occupied by the user. For example, such a thing to do is his/her homework. The control section 210 may cause the provision section 310 to provide a tactile sense to cause the user to perceive such a situation. In this case, for example, the provision device 30 may be installed in a door of the room.

The situation regarding the periphery of the user may be a situation in which the user is running a relay race but another person is overtaking the user. The control section 210 may cause the provision section 310 to provide a tactile sense to cause the user to perceive such a situation. In this case, for example, the provision device 30 may be installed in a baton.

The situation regarding the periphery of the user may be a situation in which the user is tightening a screw by using a tool and appropriate torque is output from the tool. In the case where inappropriate torque is output, a screw hole may be damaged. The control section 210 may cause the provision section 310 to provide a tactile sense to cause the user to perceive such a situation. In this case, for example, the provision device 30 may be installed in the tool.

The situation regarding the periphery of the user may be a situation of a space across a door from a space including the user. For example, such a space is a space located outside a vehicle cabin in the case where the user is in the vehicle. The control section 210 may cause the provision section 310 to provide a tactile sense to cause the user to perceive that there is an obstacle near a door, for example. In this case, for example, the provision device 30 may be installed in the door handle.

### (4) Control depending of Warning Level

The provision system 1 may change a way of providing information. For example, the provision system 1 may change the way of providing information depending on a warning level. Next, examples thereof will be described.

### - Warning Level related to Distance

The warning level may be related to a distance.

For example, the provision system 1 may change the way of providing information depending on a warning level related to a distance between the child and the vehicle driven by the user. The child is more likely to be endangered as a shorter distance is obtained between the child and the vehicle driven by the user. This increases the warning level. Therefore, the control section 210 may perform control in such a manner that intensity of the information provided by the provision section 310 increases as a shorter distance is obtained between the child and the vehicle driven by the user, that is, as the level of warning to the user increases. On the other hand, the control section 210 may perform control in such a manner that intensity of the information provided by the provision section 310 decreases as a longer distance is obtained between the child and the vehicle driven by the user, that is, as the level of warning to the user decreases.

For another example, the provision system 1 may change the way of providing information depending on a warning level related to a distance between the child and the user when the user goes to a shopping mall together with the child. The child is more likely to get lost as a longer distance is obtained between the child and the user. This increases the warning level. Therefore, the control section 210 may perform control in such a manner that intensity of the information provided by the provision section 310 increases as a longer distance is obtained between the child and the user, that is, as the level of warning to the user increases. On the other hand, the control section 210 may perform control in such a manner that intensity of the information provided by the provision section 310 decreases as a shorter distance is obtained between the child and the user, that is, as the level of warning to the user decreases.

For another example, the provision system 1 may change the way of providing information depending on a warning level related to distances between the user and tourists when the user is a tour guide and organizes a tour for the tourists. The tourists are more likely to get lost as longer distances are obtained between the user and the tourists. This increases the warning level. Therefore, the control section 210 may perform control in such a manner that intensity of the information provided by the provision section 310 increases as a longer distance is obtained between the user and a tourist, that is, as the level of warning to the user increases. On the other hand, the control section 210 may perform control in such a manner that intensity of the information provided by the provision section 310 decreases as a shorter distance is obtained between the user and a tourist, that is, as the level of warning to the user decreases.

For another example, the provision system 1 may change the way of providing information depending on a warning level related to a distance between the user and a cliff when the user is walking near the cliff. The user is more likely to be endangered as a shorter distance is obtained between the user and the cliff. This increases the warning level. Therefore, the control section 210 may perform control in such a manner that intensity of the information provided by the provision section 310 increases as a shorter distance is obtained between the user and the cliff, that is, as the level of warning to the user increases. On the other hand, the control section 210 may perform control in such a manner that intensity of the information provided by the provision section 310 decreases as a longer distance is obtained between the user and the cliff, that is, as the level of warning to the user decreases.

### - Warning Level related to Speed

The warning level may be related to speed. For example, the provision system 1 may change the way of providing information depending on a warning level related to speed of the vehicle driven by the user. There is a higher possibility that an accident such as minor collision between the vehicle driven by the user and another vehicle traveling at legal speed occurs, as a large difference is obtained between the legal speed and speed of the vehicle driven by the user. This increases the warning level. Therefore, the control section 210 may perform control in such a manner that intensity of the information provided by the provision section 310 increases as a larger difference is obtained between the legal speed and the speed of the vehicle driven by the user, that is, as the level of warning to the user increases. On the other hand, the control section 210 may perform control in such a manner that intensity of the information provided by the provision section 310 decreases as a shorter difference is obtained between the legal speed and the speed of the vehicle driven by the user, that is, as the level of warning to the user decreases.

### - Warning Level related to Position

The warning level may be related to a position.

For example, the provision system 1 may change the way of providing information depending on a warning level related to altitude of a current position of the user when the user climbs a mountain. The user is more likely to suffer from altitude sickness as the altitude increases. This increases the warning level. Therefore, the control section 210 may control the provision section 310 to provide information if the altitude of the current position of the user exceeds a caution altitude (such as 1000 meters). In addition, the control section 210 may perform control in such a manner that intensity of the information provided by the provision section 310 increases as the altitude of the current position of the user increases, that is, as the level of warning to the user increases. On the other hand, the control section 210 may perform control in such a manner that intensity of the information provided by the provision section 310 decreases as the altitude of the current position of the user decreases, that is, as the level of warning to the user decreases.

For another example, the provision system 1 may change the way of providing information depending on a warning level related to water depth of a current position of the user when the user dives into water. The user is more likely to suffer from decompression sickness as the water depth increases. This increases the warning level. Therefore, the control section 210 may control the provision section 310 to provide information if the water depth of the current position of the user exceeds caution water depth (such as 100 meters). In addition, the control section 210 may perform control in such a manner that intensity of the information provided by the provision section 310 increases as the water depth of the current position of the user increases, that is, as the level of warning to the user increases. On the other hand, the control section 210 may perform control in such a manner that intensity of the information provided by the provision section 310 decreases as the water depth of the current position of the user decreases, that is, as the level of warning to the user decreases.

### - Warning Level related to Vital Sign

The warning level may be related to vital signs. Note that, the vital signs are information related to a body such as heartbeat, blood pressure, breathing, body temperature, and the like.

For example, the provision system 1 may change the way of providing information to the user who is a hospital staff (or caregiver), depending on a warning level related to vital signs of a patient in a hospital (care receiver). For example, the control section 210 may perform control in such a manner that intensity of the information provided by the provision section 310 increases as the vital sign indicates deterioration in health condition, that is, as the level of warning to the user increases. On the other hand, the control section 210 may perform control in such a manner that intensity of the information provided by the provision section 310 decreases as the vital sign indicates improvement in health condition, that is, as the level of warning to the user decreases. Such a configuration allows the user who is the hospital staff to appropriately understand change in the health condition of the patient in the hospital.

For example, the provision system 1 may change the way of providing information depending on a warning level related to vital signs of the user who is a patient in a hospital (care receiver). For example, the control section 210 may perform control in such a manner that intensity of the information provided by the provision section 310 increases as the vital sign indicates deterioration in health condition, that is, as the level of warning to the user increases. On the other hand, the control section 210 may perform control in such a manner that intensity of the information provided by the provision section 310 decreases as the vital sign indicates improvement in health condition, that is, as the level of warning to the user decreases. Such a configuration allows the user who is the patient in the hospital to appropriately understand change in his/her health condition, which is unnoticeable to the user himself/herself.

For another example, the provision system 1 may change the way of providing information to the user who is a caregiver, depending on a warning level related to vital signs of an elderly person who is receiving care at his/her own home. For example, the control section 210 may perform control in such a manner that intensity of the information provided by the provision section 310 increases as the vital sign indicates deterioration in health condition, that is, as the level of warning to the user increases. On the other hand, the control section 210 may perform control in such a manner that intensity of the information provided by the provision section 310 decreases as the vital sign indicates improvement in health condition, that is, as the level of warning to the user decreases. Such a configuration allows the user who is the caregiver to appropriately understand the health condition of the elderly person who is the care receiver. For example, this makes it possible to prevent the elderly person from getting hyperthermia at his/her own home without being noticed by anyone.

For another example, the provision system 1 may change the way of providing information to the user who is a subordinate, depending on a warning level related to vital signs of the user's supervisor. For example, the control section 210 may perform control in such a manner that intensity of the information provided by the provision section 310 increases as the vital sign indicates that the supervisor has a worse mood, that is, as the level of warning to the user increases. On the other hand, the control section 210 may perform control in such a manner that intensity of the information provided by the provision section 310 decreases as the vital sign indicates that the supervisor has a better mood, that is, as the level of warning to the user decreases. Note that, examples of the vital signs indicating whether the supervisor has a better mood or a worse mood may include tone of voice and complexion. Note that, complexion may be recognized on the basis of an image of a face of the supervisor, which has been obtained through facial recognition.

### - Warning Level related to Maturity Level

The warning level may be related to maturity level. Here, the maturity means maturity level of food.

For example, the provision system 1 may change the way of providing information depending on a warning level related to maturity level of vegetables in a refrigerator. The vegetable get bruised when a current maturity level of the vegetables exceeds an ideal maturity level. In this case, the warning level may increase to notify the user that the vegetable is getting bruised. Therefore, the control section 210 may perform control in such a manner that intensity of the information provided by the provision section 310 increases as a difference between the ideal maturity level and the current maturity level of the vegetables that exceeds the ideal maturity level increases, that is, as the level of warning to the user increases. On the other hand, the control section 210 may perform control in such a manner that intensity of the information provided by the provision section 310 decreases as a difference between the ideal maturity level and the current maturity level of the vegetables that exceeds the ideal maturity level is smaller, that is, as the level of warning to the user decreases.

For another example, the provision system 1 may change the way of providing information depending on a warning level related to an expiration date of food. As more days elapses since the expiration date, the user may suffer from much risks if the user eats the food. In this case, the warning level may increase to notify the user how many days have elapsed since the expiration date. Therefore, the control section 210 may perform control in such a manner that intensity of the information provided by the provision section 310 increases as the number of days that have elapsed since the expiration date increases, that is, as the level of warning to the user increases. On the other hand, the control section 210 may perform control in such a manner that intensity of the information provided by the provision section 310 decreases as the number of days that have elapsed since the expiration date decreases, that is, as the level of warning to the user decreases.

### - Warning Level related to Bad Smell

For example, the provision system 1 may change the way of providing information depending on a warning level related to bad smell. When the user is searching for a source of the bad smell, the bad smell gets stronger as the user comes closer to the source of the bad smell. In this case, the warning level may increase. Therefore, the control section 210 may perform control in such a manner that intensity of the information provided by the provision section 310 increases as the bad smell gets stronger, that is, as the level of warning to the user increases. On the other hand, the control section 210 may perform control in such a manner that intensity of the information provided by the provision section 310 decreases as the bad smell gets weaker, that is, as the level of warning to the user decreases.

### - Warning Level related to Amount of Radiation

For example, the provision system 1 may change the way of providing information depending on a warning level related to an amount of radiation. A high amount of radiation is harmful. In this case, the warning level may increase. Therefore, the control section 210 may perform control in such a manner that intensity of the information provided by the provision section 310 increases as an amount of radiation increases, that is, as the level of warning to the user increases. On the other hand, the control section 210 may perform control in such a manner that intensity of the information provided by the provision section 310 decreases as an amount of radiation decreases, that is, as the level of warning to the user decreases.

### - Warning Level related to Gaze Direction

The warning level may be related to a gaze direction.

For example, the provision system 1 may change the way of providing information depending on the number of surrounding people gazing at the user.

The level of warning to the user may increases as the number of surrounding people gazing at the user increases. Therefore, the control section 210 may perform control in such a manner that intensity of the information provided by the provision section 310 increases as the number of people gazing at the user increases, that is, as the level of warning to the user increases. On the other hand, the control section 210 may perform control in such a manner that intensity of the information provided by the provision section 310 decreases as the number of people gazing at the user decreases, that is, as the level of warning to the user decreases.

For another example, the provision system 1 may change the way of providing information depending on the number of people who are peeping at a screen of the smartphone used by the user. The level of warning to the user may increases as the number of people peeping at a screen of the smartphone used by the user increases. Therefore, the control section 210 may perform control in such a manner that intensity of the information provided by the provision section 310 increases as the number of peeping people around the user increases, that is, as the level of warning to the user increases. On the other hand, the control section 210 may perform control in such a manner that intensity of the information provided by the provision section 310 decreases as the number of peeping people around the user decreases, that is, as the level of warning to the user decreases.

The various modifications have been described above.

In addition, the effects described herein are illustrative or exemplary but not limitative. That is, besides the above effects or instead of the above effects, the technology according to the present disclosure may provide another effect that is obvious to a person skilled in the art.

In addition, a program for causing hardware such as a CPU, a ROM, or a RAM installed in a computer to exert a function equal to that of the configuration of the control device 20 can be created. Also, a non-transitory computer readable recording medium having the program recorded therein may be provided.

### Reference Signs List

- 1: provision system
- 10: detection device
- 110: detection section
- 20: control device
- 210: control section
- 30: provision device
- 310: provision section

## Claims

1. A control device comprising
a control section configured to control provision of information by a provision section that provides information,
wherein the control section causes the provision section to provide the information regardless of whether or not a user has issued a request in a case where a situation that should be understood by the user is detected.

2. The control device according to claim 1,
wherein the control section causes the provision section to provide the information in a case where a situation in which the user should change behavior is detected as the situation that should be understood by the user.

3. The control device according to claim 1 or 2,
wherein the situation that should be understood by the user includes a situation regarding a periphery of the user.

4. The control device according to claim 3,
wherein the situation regarding the periphery of the user includes a situation in which there is an obstructive factor to maintenance of a condition in a space where it is difficult for the user to perceive a situation.

5. The control device according to claim 4,
wherein the space where it is difficult for the user to perceive the situation includes the user's blind spot.

6. The control device according to claim 4,
wherein the space where it is difficult for the user to perceive the situation includes a space across an opening/closing mechanism from the user.

7. The control device according to any of claims 1 to 6, wherein
the provision of the information by the provision section includes main provision and sub provision,
the main provision provides information,
the sub provision provides information in a way of using less stimulation than the main provision, and
the control section causes the provision section to provide information through the sub provision before providing information through the main provision.

8. The control device according to any of claims 1 to 7,
wherein the control section causes the provision section to provide information to be tactually perceived by the user.

9. A provision system comprising:
a provision section configured to provide information to a user; and
a control section configured to control the provision of the information by the provision section,
wherein the control section causes the provision section to provide the information regardless of whether or not the user has issued a request in a case where a situation that should be understood by the user is detected.
